# EUROPEAN PATENT APPLICATION

(11) **EP 4 596 411 A1**
(43) Date of publication of application: **06.08.2025**
(21) Application number: 25151431.1
(22) Date of filing: 13.01.2025
(51) Int. Cl.: B64D 13/04, B64F 5/60, B64D 13/06

(54) **SYSTEM FOR TESTING A CABIN PRESSURE CONTROL SYSTEM**

(30) Priority: 05.02.2024 IN 202411007615; 17.04.2024 US 202418637716
(71) Applicant: Honeywell International Inc., Charlotte, NC 28202 (US)
(72) Inventor: VENKATARAO, Raviprakash Thotadakumbri, Charlotte, 28202 (US)
(74) Representative: Haseltine Lake Kempner LLP

(57) **Abstract**

A system including: a pressure controller comprising one or more valves, wherein each valve is configured to define a variable orifice, an enclosure containing a Cabin Pressure Control System (CPCS) and processing circuitry. The processing circuitry is configured to: transmit an electrical signal to the pressure controller to cause at least one valve to define an orifice, wherein a diameter of the orifice varies as a function of a voltage of the electrical signal; cause the pressure controller to output air into the enclosure through the orifice, wherein the voltage of the electrical signal controls the pressure level; and receive a signal from the CPCS indicative of one or more outputs by the CPCS in response to pressurization of the enclosure to the pressure level.

## Description

This application claims the benefit of Indian Provisional Patent Application No. 202411007615, filed February 5, 2024 and entitled "SYSTEM FOR TESTING A CABIN PRESSURE CONTROL SYSTEM," the entire contents of which is incorporated herein by reference.

### TECHNICAL FIELD

The present disclosure relates to systems and techniques for testing a cabin pressure control system (CPCS) configured to operate in a vehicle.

### BACKGROUND

A cabin pressure control system may monitor and maintain cabin pressure within a cabin of a vehicle, e.g., an aircraft. Cabin pressure control systems must be configured to accurately control the cabin pressure within a cabin in response to changes in external pressure. Testing systems and techniques may evaluate the ability of the CPCS to response to simulated changes in external pressure.

### SUMMARY

A Cabin Pressure Control System (CPCS) is configured to monitor and regulate air pressure within a cabin of a vehicle. A vehicle may include, but is not limited to, an automobile, an aircraft, an unmanned aerial vehicle (UAV), a watercraft, or the like. CPCS may maintain the air pressure within the cabin at a specific level in response to changes in atmospheric pressure external to the cabin (e.g., external to the vehicle). In some examples, where the vehicle is an aircraft, the CPCS may maintain cabin pressure at a desired cabin pressure as the vehicle ascends or descends.

This disclosure is directed to testing systems and techniques for a CPCS. The CPCS may be removably secured to the testing system. The testing system may define a testing enclosure configured to retain the CPCS. While some examples described herein are described primarily with reference to a test enclosure, other testing systems described herein may be directly fluidically coupled to the CPCS (e.g., via an input port of the CPCS). The testing system may control a pressure controller of the system to pressurize the test enclosure to a test pressure level and receive output signals from the CPCS in response to the test pressure level. The testing system may evaluate the output signals to determine whether the CPCS is operating properly in response to the test pressure level. The testing system may subject the CPCS to various test pressure levels and/or changes in test pressure level to evaluate the response of the CPCS in response to various scenarios.

The pressure controller of the testing system may include one or more variable valves connecting the test enclosure to pressure source(s) and/or vacuum source(s). The testing system may control the pressure controller to define orifices of variable sizes (e.g., variable diameters) for the valves, which may control the flow rate of a fluid into and/or out of the test enclosure, e.g., thereby controlling the test pressure level within the test enclosure.

Within the test enclosure, the CPCS may be coupled to a control system of the testing system via a digital encoder of the testing system. The digital encoder may convert output signals from the CPCS into an electrical signal and transmit the electrical signal to the control system of the testing system. For example, the digital encoder may determine a position of an actuator connected to the CPCS, convert the position of the actuator into a digital signal, and transmit the digital signal to the control system. The control system may evaluate the response of the CPCS to a test pressure level based on the electrical signal.

The example testing system described herein may provide several advantages over other testing systems and techniques for testing CPCS. The variable-orifice valves of the pressure controller may allow for more precise control of test pressure level (e.g., at low flow conditions) and for a more continuous and less step-wise fluid flow into the test enclosure compared to other example valves (e.g., ON/OFF solenoid valves). The increased precision and increased continuity in the fluid flow may reduce noise in the test pressure level, which may allow the CPCS to generate more accurate output signals that are not affected by noise in the test pressure level. The increased precision and continuity may also allow for reduced response time for the testing system to adjust the test pressure level within the enclosure and increase the resolution at which the testing system controls the test pressure level, which may increase a range of testing scenarios the testing system is configured to simulate. The variable valves may also allow for increased control of the test pressure level in the event of fluid leak in the test system.

The use of the digital encoder within the testing system may provide several technical advantages over other devices and/or systems used to couple the CPCS to a testing system (e.g., potentiometer-based transducers). The digital encoder may be configured to directly interface with the control system of the testing system without requiring intermediary devices, which may increase the accuracy and/or resolution of the transmission of signals from the CPCS to the control system. The digital encoder may also experience reduced wear, drift, and/or effects of hysteresis compared to potentiometer-based transducers under various test scenarios (e.g., under electromagnetic interference (EMI) or electromagnetic compatibility (EMC) test scenarios).

In some examples, the disclosure is directed to a system comprising: a pressure controller coupled to a pressure source and comprising one or more valves, wherein each valve of the one or more valves is configured to define a variable orifice, and wherein the pressure controller is removably coupled to an enclosure containing a Cabin Pressure Control System (CPCS); a digital encoder coupled to the CPCS; and processing circuitry coupled to the pressure controller and to the digital encoder, wherein the processing circuitry is configured to: transmit an electrical signal to the pressure controller to cause at least one valve of the one or more valves to define an orifice, wherein a diameter of the orifice varies as a function of a voltage of the electrical signal; cause the pressure controller to output air from the pressure source into the enclosure through the orifice to pressurize the enclosure to a pressure level, wherein the voltage of the electrical signal controls the pressure level, and wherein a flow rate of the air varies as a function of the diameter of the orifice; and receive, via the digital encoder, a signal from the CPCS indicative of one or more outputs by the CPCS in response to pressurization of the enclosure to the pressure level.

In some examples, the disclosure is directed to a method comprising: transmitting, by processing circuitry of a system, a first electrical signal to a pressure controller of the system to cause at least one valve of one or more valves of the pressure controller to define an orifice, wherein each valve of the one or more valves is configured to define a variable orifice, and wherein a diameter of the orifice varies as a function of a voltage of the electrical signal; causing, by the processing circuitry, the pressure controller to output air from a pressure source to an enclosure containing a Cabin Pressure Control System (CPCS) through the orifice to pressurize the enclosure to a pressure level corresponding to the first electrical signal, wherein a flow rate of the air varies as a function of the diameter of the orifice; receiving, by the processing circuitry and via a digital encoder of the system, a second electrical signal from the CPCS indicative of one or more outputs by the CPCS in response to pressurization of the enclosure to the pressure level.

In some examples, the disclosure is directed to a system for testing a Cabin Pressure Control System (CPCS), the system comprising: a pressure controller comprising: an inlet valve coupled to a pressure source, the inlet valve being configured to define a first variable-diameter orifice, and an outlet valve coupled to a vacuum source, the outlet valve being configured to define a second variable-diameter orifice; an enclosure configured to retain the CPCS; a digital encoder coupled to the CPCS; and processing circuitry coupled to the pressure controller and to the digital encoder, wherein the processing circuitry is configured to: transmit a first electrical signal to the pressure controller to cause the inlet valve to define the first orifice having a first diameter and to cause the outlet valve to define the second orifice having a second diameter, wherein at least one of the first diameter or the second diameter varies as a function of a voltage of the electrical signal; cause the pressure controller to pressurize the enclosure to a pressure level by inputting air from the pressure source into the enclosure via the first orifice and removing air from the enclosure to a vacuum source via the second orifice, wherein the pressure level within the enclosure varies as a function of the first diameter and the second diameter; and receive, via the digital encoder, a second electrical signal from the CPCS indicative of one or more outputs by the CPCS in response to pressurization of the enclosure to the pressure level.

The details of one or more examples are set forth in the accompanying drawings and the description below. Other features, objects, and advantages will be apparent from the description and drawings, and from the claims.

### BRIEF DESCRIPTION OF THE FIGURES

The details of one or more examples are set forth in the accompanying drawings and the description below. Other features, objects, and advantages will be apparent from the description and drawings, and from the claims.
FIG. 1 is a block diagram illustrating an example testing system for a CPCS.
FIG. 2 is a block diagram illustrating another example testing system for a CPCS.
FIG. 3 is a graph illustrating a change in output pressure by an example pressure controller of any of FIGS. 1 or 2 in response to an input electrical signal.
FIG. 4 is a graph illustrating the example change in output pressure illustrated in FIG. 3 over time.
FIG. 5 is a flow chart illustrating an example process of testing a CPCS via the example testing system of any of FIGS. 1 or 2.
FIG. 6 is a flow chart illustrating an example process of adjusting the test pressure level within the example test enclosure of any of FIGS. 1 or 2 based on output signals from the CPCS.
FIG. 7 is a flow chart illustrating an example process of controlling the output pressure by the pressure controller of any of FIGS. 1 or 2.

Like reference characters refer to like elements throughout the figures and description.

### DETAILED DESCRIPTION

Various examples discussed herein describe testing systems and /or testing devices for a Cabin Pressure Control System (CPCS) configured to be installed within a vehicle. The CPCS may monitor and regulate air pressure of a cabin and/or other chamber within the vehicle. The CPCS may determine the air pressure of air within the cabin and of air external to the cabin (e.g., external to the vehicle) and may adjust input and/or output of air between the cabin and an external environment to maintain the air pressure within the cabin at a threshold pressure level and/or within a threshold pressure range. For example, as the air pressure of the external air decreases, the CPCS may increase the rate of input of air into the cabin to maintain the air pressure within the cabin. In some examples, the vehicle is configured to rapidly change altitude and/or transition between different environments having different air pressures. In such examples, the CPCS is configured to rapidly determine the external air pressure and regulate the air pressure within the cabin accordingly.

The CPCS may perform additional functions in addition to and/or instead of the regulation of cabin air pressure. In some examples, the CPCS reduces drag on the vehicle and increase fuel efficiency of the vehicle via operation of one or more thrust recovery components (e.g., via operation of one or more thrust recovery outflow valves). In some examples, the CPCS facilitates heating, air conditioning, and/or ventilation of the cabin of the vehicle. CPCS may include, but is not limited to, Fourth-Generation Digital Cabin Pressure Control Systems (DCPCS).

A manufacturing assembly may test the functions of the CPCS prior to installation of the CPCS in the vehicle, e.g., to ensure that the CPCS is functioning at a requisite level of accuracy and/or reliability. The testing systems, devices, and/or techniques described herein may be used to subject the CPCS to various simulated conditions, receive feedback from the CPCS in response to the simulated conditions, and evaluate the CPCS based on the received feedback.

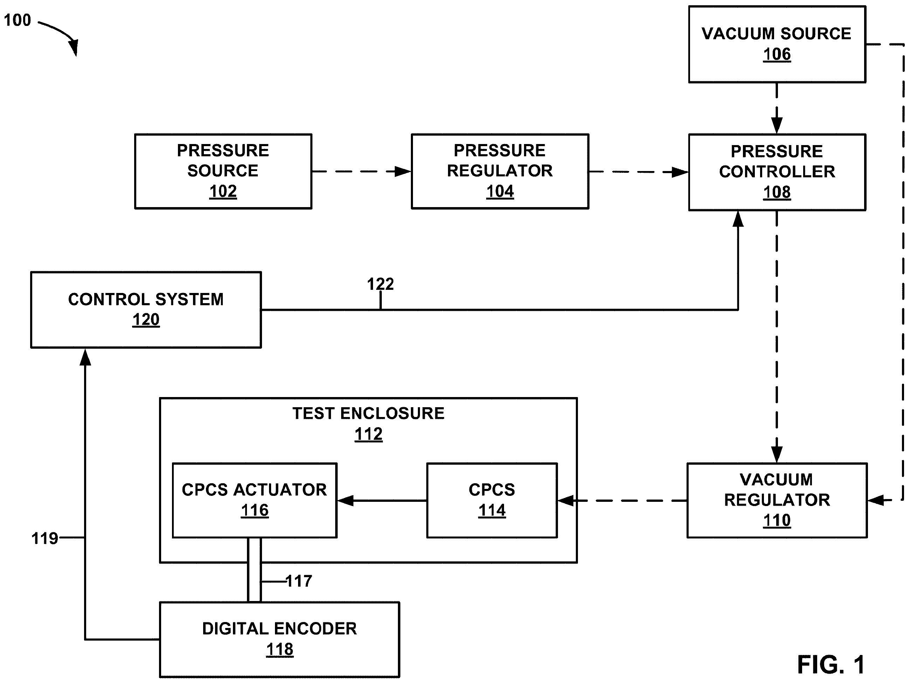

FIG. 1 is a block diagram illustrating an example testing system 100 (also referred to herein as "system 100") for a CPCS 114. System 100 may include, but is not limited to, a pressure regulator 104, pressure controller 108, vacuum regulator 110, test enclosure 112, digital encoder 118, and control system 120.

Test enclosure 112 may be configured to removably retain CPCS 114. While system 100 is illustrated and described primarily herein with reference to test enclosure 112 retaining CPCS 114, any of the example systems described and illustrated herein may directly couple pressure regulator 104, pressure controller 108, and/or vacuum regulator 110 directly to CPCS 114 (e.g., directly to an input port on CPCS 114). Test enclosure 112 is fluidically connected to pressure controller 108. Pressure controller 108 may control the air pressure of air within test enclosure 112 by controlling the flow of air (e.g., the flow rate of air, the pressure of the air) from a pressure source 102 into test enclosure 112 via pressure regulator 104 and/or the flow of air out of test enclosure 112 to a vacuum source 106 via pressure regulator 104. Pressure controller 108 may include two or more variable-orifice control valves. Each of the control valves may define an orifice with a variable and adjustable diameter. Pressure controller 108 may fluidically couple pressure regulator 104 to test enclosure 112 via a first variable-orifice control valve and fluidically couple vacuum regulator 110 to test enclosure 112 via a second variable-orifice control valve different from the first valve. An example pressure controller 108 includes a QPV Electronic Pressure Regulator available from Equilibar, LLC of Fletcher, North Carolina.

Air may flow from pressure source 102 through pressure regulator 104 and into test enclosure 112 via the orifice defined by the first variable-orifice control valve. Air may flow from the inner volume of test enclosure 112 to vacuum source 106 through vacuum regulator 110 via the orifice defined by the second variable-orifice control valve. The diameters (e.g., effective diameters) of the orifices defined by the first valve and the second valve may define a flow rate of air flowing across the respective valve. For example, increasing the effective diameter of the orifice defined by the first valve may cause an increase in the flow rate of air from pressure source 102 into test enclosure 112, and vice versa. Similarly, increasing the effective diameter of the orifice defined by the second valve may cause an increase in the flow rate of air from test enclosure 112 into vacuum source 106, and vice versa.

Pressure controller 108 may adjust the effective diameters of the orifices defined by the valves to precisely control the air pressure and/or the change in air pressure within test enclosure 112. For example, pressure controller 108 may be configured to dynamically adjust the effective diameters of the orifices to produce a substantially continuous (e.g., substantially linear) change in air pressure within test enclosure 112. Pressure controller 108 may monitor air pressure within test enclosure 112 and adjust the effective diameters of the orifices to maintain the air pressure within test enclosure 112 at a specific air pressure level (e.g., an air pressure level corresponding to a current simulated scenario that system 100 is testing). Pressure controller 108 may adjust the effective diameters of the orifices to maintain an air pressure level (e.g., the specific air pressure level) based on feedback from a pressure sensor fluidically connected to test enclosure 112 and integral to pressure controller 108. In some examples, pressure controller 108 is configured to adjust the effective diameters of the orifices in response to an electrical signal 122 from control system 120. In such examples, the effective diameters of the orifices may vary as a function of the voltage of electrical signal 122.

Pressure source 102 may include one or more components configured to pressurize air and output the pressurized air. Pressure source 102 may include, but is not limited to, one or more air compressors. Pressure source 102 may be permanently attached to system 100 (e.g., is integral to system 100). In some examples, pressure source 102 is removable connected to system 100. In such examples, pressure source 102 may be removed from system 100, which may facilitate transportation of system 100 and/or maintenance of pressure source 102 and/or system 100.

Pressure source 102 is connected to pressure controller 108 via pressure regulator 104. Pressure regulator 104 may reduce the air pressure of the air from pressure source 102 to an input air pressure level for pressure controller 108. Pressure regulator 104 may be configured to maintain the pressure of the air flowing into pressure controller 108 at the input air pressure level and may account for fluctuations in the air pressure from pressure source 102. Pressure regulator 104 may be attached to one or more of pressure source 102 and/or pressure controller 108. In some examples, pressure source 102 is removably attached to pressure controller 108. In some examples, pressure source 102 is integral to pressure controller 108 (e.g., is disposed within a housing of pressure controller 108).

Vacuum source 106 may include one or more components configured to generate a negative pressure (i.e., a vacuum pressure) and draw air towards vacuum source 106. Vacuum source 106 may include, but is not limited to, a vacuum pump. Vacuum source 106 may be permanently or removably connected to system 100. Vacuum source 106 is coupled to pressure controller 108 via vacuum regulator 110. Vacuum regulator 110 may maintain consistent vacuum pressure acting on pressure controller 108 (e.g., on the second valve of pressure controller 108) and may regulate the vacuum pressure in response to fluctuations in vacuum pressure at vacuum source 106. Vacuum regulator 110 may be permanently or removably connected to system 100 (e.g., to pressure controller 108 and/or to vacuum source 106). In some examples, vacuum regulator 110 is integral to pressure controller 108 (e.g., is disposed within the housing of pressure controller 108).

When CPCS 114 determines the air pressure of air within test enclosure 112, CPCS 114 may output a signal in response to the air pressure level. The output signal may include, but is not limited to, an electrical signal or a mechanical signal. The output signal may be indicative of one or more of, but is not limited to, a control signal outputted by CPCS 114 to adjust an outflow valve configured to adjust cabin pressure; a cabin pressure setpoint; a sensed pressure of the pressurized air; an output force generated by an actuator coupled to the CPCS (e.g., CPCS 116); or a position of CPCS actuator 116. Characteristics of the output signal (e.g., type, magnitude, frequency, duration) may vary based on the air pressure level. CPCS 114 may determine the characteristics of the output signal based on the determined air pressure level in accordance with instructions stored in CPCS 114 and executed by processing circuitry or other computing elements of CPCS 114.

Within test enclosure 112, CPCS 114 is connected to a CPCS actuator 116. In some examples, CPCS actuator 116 is integral to CPCS 114. In some examples, CPCS actuator 116 is integral to test enclosure 112 and configured to be coupled to one or more output sources of CPCS 114 when CPCS 114 is disposed within test enclosure 112. CPCS actuator 116 may be configured to transition between a plurality of positions in response to receiving the output signal from CPCS 114.

CPCS actuator 116 may be mechanically coupled to digital encoder 118 of system 100, e.g., via mechanical shaft 117. The position of CPCS actuator 116 may be transmitted to digital encoder 118 via mechanical shaft 117. Digital encoder 118 may convert the position of CPCS actuator 116, and by extension the output signal from CPCS 114, from a mechanical signal into an electrical signal 119. Digital encoder 118 may then transmit electrical signal 119 to control system 120. In such examples, one or more characteristics of electrical signal 119 (e.g., voltage of electrical signal 119) may vary based on the output signal from CPCS 114.

Control system 120 may include processing circuitry configured to control the functions of other components within system 100 (e.g., pressure controller 108, pressure source 102, vacuum source 106, digital encoder 118). The processing circuitry of control system 120 may be configured to retrieve instructions (e.g., from memory of control system 120) and execute the retrieved instructions to perform any of the functions attributed to control system 120 below. The processing circuitry may include, but is not limited to, a Proportional-Integral-Derivative (PID) controller.

Control system 120 may transmit electrical signal 122 to cause pressure controller 108 to pressurize test enclosure 112 to a target air pressure level corresponding to electrical signal 122. The diameters (e.g., effective diameters) of the orifices of the valves of pressure controller 108 may vary as a function of electrical signal 122. Control system 120 may alter the voltage of electrical signal 122 to control the effective diameters of the orifices of the valves. In some examples, control system 120 may alter the voltage of electrical signal 122 to control the rate of change and/or the magnitude of change in the effective diameters of the orifices. Control system 120 may output electrical signal 122 at specified voltages to cause pressure controller 108 to pressurize test enclosure 112 in accordance with one or more scenarios simulated by system 100. Control system 120 may output different electrical signals 122 to pressure controller 108 to subject CPCS 114 to different scenarios (e.g., different pressure levels, different changes in pressure levels).

Control system 120 may receive electrical signals 119 from digital encoder 118. Electrical signals 119 may correspond to the outputs from CPCS 114 in response pressure levels and/or changes in pressure levels within test enclosure 112. Control system 120 may compare electrical signals 119 against an expected electrical signal stored in memory of control system 120 to determine whether CPCS 114 is generating expected outputs in response to the simulated conditions within test enclosure 112. In some examples, control system 120 may retrieve and executed instructions stored in the memory of control system 120 to apply an equation, algorithm, lookup table, or the like to determine whether CPCS 114 is generating expected outputs. Control system 120 may output the results of the comparison between electrical signals 119 and the expected electrical signal to one or more computing devices and/or via a user interface (UI) of control system 120. In some examples, control system 120 is configured to store the received electrical signals 119 in memory of control system 120.

In some examples, in response to a determination that CPCS 114 is generating expected outputs in response to a first simulated scenario with a first set of simulated conditions, control system 120 is configured to subject CPCS 114 to a second simulated scenario with a second set of simulated conditions different from the first set. In some examples, control system 120 is configured to subject CPCS 114 to the second simulated scenario in response to user input. To subject CPCS 114 to a simulated scenario, control system 120 is configured to transmit electrical signal 122 to pressure controller 108 to cause pressure controller 108 to pressurize test enclosure 112 in accordance with the simulated conditions (e.g., pressure level, change in pressure level) corresponding to the simulated scenario. Control system 120 may control the voltage of electrical signal 122 to cause pressure controller 108 to pressurize test enclosure 112 in accordance with the simulated conditions.

System 100 may provide several advantages over other testing systems and techniques for testing CPCS 114. Variable-orifice valves of pressure controller 108 may allow for more precise control of pressure level within test enclosure 112 (e.g., at low flow conditions) by allowing the precise adjustment of the effective diameters of the open orifices of the valves, which may allow for precise adjustments of flow rates of air from pressure source 102 into test enclosure 112 and from test enclosure 112 to vacuum source 106. The precise adjustments of the effective diameters of the open orifices of the valves may also allow for a more continuous and less step-wise fluid flow into test enclosure 112 compared to other valves such as, but is not limited to, ON/OFF solenoid valves. The increased precision and increased continuity in the changes in fluid flow may reduce noise in pressure level within test enclosure 112, which may allow CPCS 114 to generate more accurate output signals that are not impacted by noise in the pressure level within test enclosure 112. The increased precision and continuity may also allow for reduced response time for system 100 to adjust the pressure level within test enclosure 112 and increase the resolution at which system 100 controls the pressure level within test enclosure 112. The increased resolution may increase a range of testing scenarios system 100 may simulate and subject CPCS 114 to. The variable valves may also allow for increased control of the pressure level within test enclosure 112 in the event of fluid leak in system 100 (e.g., in test enclosure 112, in one or more channels fluidically connecting components of system 100.

The use of digital encoder 118 within system 100 may provide several technical advantages over other devices and/or systems used to couple CPCS 114 to a testing system, such as potentiometer-based transducers. Digital encoder 118 may be configured to directly interface with control system 120 of system 100 without requiring intermediary devices, which may increase the accuracy and/or resolution of the transmission of signals from CPCS 114 (e.g., from CPCS actuator 116 and/or digital encoder 118) to control system 120. Digital encoder 118 may also experience reduced wear, drift, and/or effects of hysteresis compared to potentiometer-based transducers under various simulation scenarios (e.g., under electromagnetic interference (EMI) or electromagnetic compatibility (EMC) test scenarios), which may increase a number of simulation scenarios which system 100 may subject CPCS 114 to.

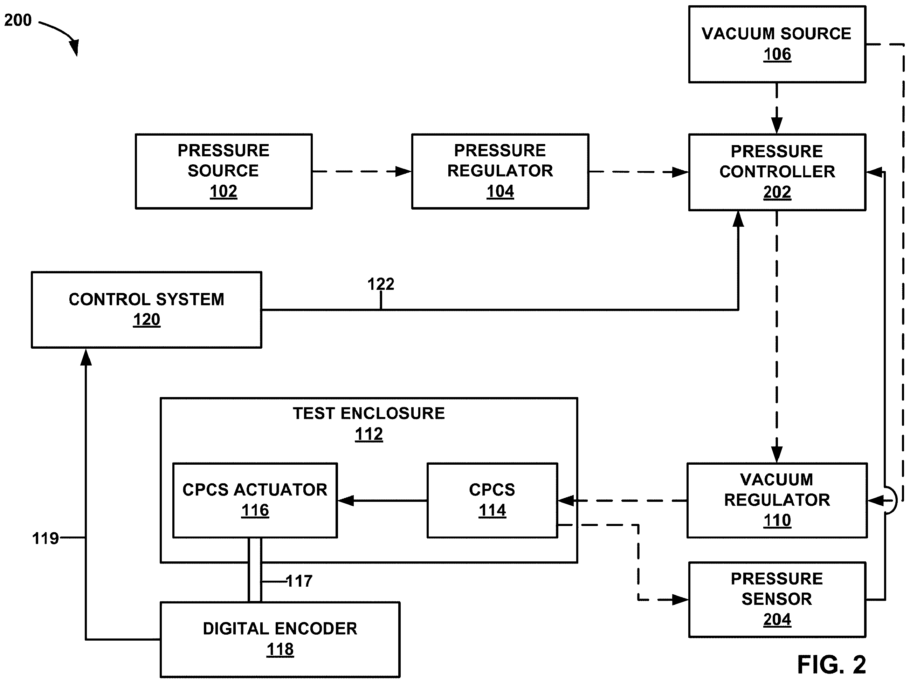

FIG. 2 is a block diagram illustrating another example testing system 200 (alternatively referred to herein as "system 200") for CPCS 114. System 200 may be substantially similar to system 100 as illustrated in FIG. 1 with exception to the differences discussed below. While system 200 is illustrated and described primarily herein with reference to test enclosure 112 retaining CPCS 114, any of the example systems described and illustrated herein may directly couple pressure regulator 104, pressure controller 202, and/or vacuum regulator 110 directly to CPCS 114 (e.g., directly to an input port on CPCS 114).

As illustrated in FIG. 2, system 200 may include pressure controller 202 and a pressure sensor 204 separate from and in electrical communication with pressure controller 202. When control system 120 controls pressure controller 202 via electrical signal 122 to pressurize test enclosure 112 in accordance with a simulation scenario, the actual pressure level within test enclosure 112 may be different from the threshold pressure level corresponding to the simulation scenario. For example, the arrangement of components within test enclosure 112 and/or the flow of air from pressure controller 202 to the inner volume of test enclosure 112 may lead to variations in air pressure between different regions within the inner volume. In such examples, pressure controller 202 needs to adjust flow rate of air into and/or out of test enclosure 112 (e.g., by adjust the effective diameters of the open orifices defined by valves of pressure controller 202) to ensure that the air pressure level within test enclosure 112 satisfies the threshold pressure level for the simulation scenario. For example, pressure controller 202 may adjust the effective diameters of the orifices of the valves to increase the flow rate of air into test enclosure 112 in response to a determination that the actual pressure level within test enclosure 112 is less than the threshold pressure level, or vice versa.

Pressure sensor 204 may be fluidically connected to test enclosure 112 and is configured to determine the actual pressure level within test enclosure 112. In some examples, pressure sensor 204 is affixed to test enclosure 112, e.g., to an inner surface of test enclosure 112. In some examples, pressure sensor 204 may be removably attached to system 200. The removability of pressure sensor 204 may facilitate replacement of pressure sensor 204 with another pressure sensor or other sensing element and/or facilitate disassembly of system 200 (e.g., for transportation). Pressure sensor 204 may include, but is not limited to, barometers, strain gauges, resistive air pressure transducers, capacitive air pressure transducers, inductive air pressure transducers, or the like. In some examples, pressure sensor 204 includes one or more of Series 1000, 6000, or 9000 Ultra High-Precision Pressure Sensors available from Althen BV Sensors & Controls of Rijswijk, The Netherlands. Pressure sensor 204 may be electrically connected to one or more of pressure controller 202 or control system 120 and transmit signals corresponding to determined actual pressure levels for test enclosure 112 to one or more of pressure controller 202 or control system 120.

Pressure controller 202 may adjust the effective diameters of the orifices of the valves based on signals corresponding to the determined actual pressure levels from pressure sensor 204. Pressure controller 202 may iteratively adjust the valves based on the signals until pressure controller 202 determines that the actual pressure level within test enclosure 112 satisfies the threshold pressure level. In some examples, processing circuitry of control system 120 is configured to receive the signals from pressure sensor 204 and adjust electrical signal 122 (e.g., adjust the voltage of electrical signal 122) based on the received signals from pressure sensor 204. In such examples, the processing circuitry of control system 120 may iteratively adjust electrical signals based on the received signals until the processing circuitry determines that the actual pressure level within test enclosure 112 satisfies the threshold pressure level.

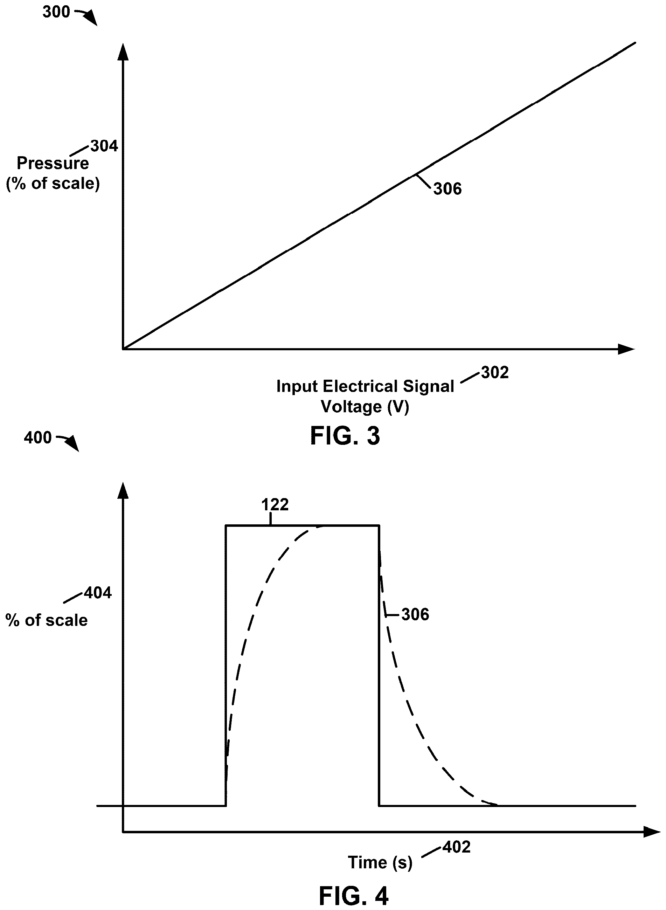

FIG. 3 is a graph 300 illustrating a change in output pressure 306 by an example pressure controller of any of FIGS. 1 or 2 in response to an input electrical signal. While graph 300 is primarily described with respect to pressure controller 108 of system 100, graph 300 may be applicable to any example pressure controller described herein.

Output pressure 306 from pressure controller 108 may be measured as a percentage 304 of a maximum output pressure for pressure controller 108. For example, when output pressure 306 is at 50%, a magnitude of output pressure 306 (e.g., in Megapascals (MPa), pound-force per square inch (PSI), or other pressure unit) is equivalent to 50% of the magnitude of the maximum output pressure for pressure controller 108.

As illustrated in graph 300, the pressure percentage 304 of output pressure 306 may vary as a function of voltage 302 of electrical signal 122. As voltage 302 increases, pressure controller 108 increases the effective diameter of an orifice of a valve connecting pressure source 102 to test enclosure 112, which increases flow rate of air through pressure controller 108, thereby increasing the output pressure for pressure controller 108. As pressure controller 108 includes variable-orifice valves, changes in voltage 302 may lead to a substantially continuous change in the effective diameter of the orifice, which may in turn lead to a substantially continuous (e.g., linear) and non-step-wise change in output pressure 306, e.g., as compared to a non-variable-orifice value (e.g., an ON/OFF solenoid valve). The change in percentage 304 of output pressure 306 in response to change in voltage 302 may be linear, nonlinear, parabolic, exponential, or along any other continuous function.

FIG. 4 is a graph 400 illustrating the example change in output pressure 306 illustrated in FIG. 3 over time 402. As illustrated in graph 400, control system 120 may transmit electrical signal 122 to pressure controller 108 over time 402. When voltage 302 of electrical signal 122 as a percentage 404 of a maximum voltage of electrical signal 122 (e.g., up to 10 volts (V)), electrical signal 122 causes pressure controller 108 to output air into test enclosure 112 to pressurize test enclosure 112. Control system 120 may terminate transmission of electrical signal 122 to pressure controller 108 after a threshold period of time 402 has passed to cause pressure controller 108 to terminate pressurization of test enclosure 112. When pressure controller 108 does not receive electrical signal 122, the orifices of the valves are closed, thereby preventing flow of air into and/or out of test enclosure 112.

In response to electrical signal 122, the magnitude of output pressure 306 as a percentage 404 of the maximum output pressure may increase, e.g., due to the increase in the effective diameter of the orifice in response to electrical signal 122. Percentage 404 of the magnitude of output pressure 306 may increase until percentage 404 reaches a maximum percentage (e.g., 100%) Once electrical signal 122 is terminated, percentage 404 of the magnitude of output pressure 306 decreases until the magnitude of output pressure 306 reaches 0%. As illustrated in graph 400, there may be a delay between when pressure controller 108 receives electrical signal 122 and when percentage 404 of the magnitude of output pressure 306 reaches the maximum percentage. Similarly, there mab be a delay between when electrical signal 122 is terminated and when percentage 404 of the magnitude of output pressure 306 reaches 0%. The delay may be due to a lag time between reception of electrical signal 122 and output pressure 306 achieving a maximum magnitude and/or between termination of electrical signal 122 and reduction of output pressure 306. Variable-orifice valves of pressure controller 108 may reduce the lag time between electrical signal 122 and output pressure 306 compared to other types of valves within other testing systems (e.g., solenoid ON/OFF valves).

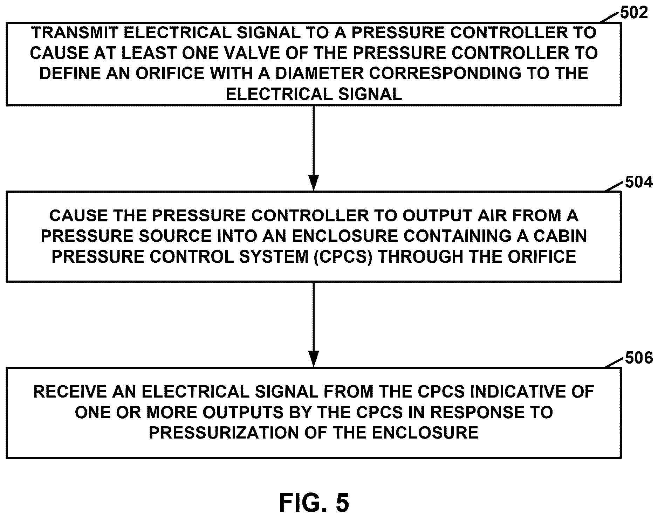

FIG. 5 is a flow chart illustrating an example process of testing CPCS 114 via the example testing system of any of FIGS. 1 or 2 (e.g., system 100, system 200). While FIG. 5 is primarily described with respect to system 100 as illustrated in FIG. 1, the example process illustrated in FIG. 5 may be performed with any testing systems and/or devices described herein. In addition, while FIG. 5 illustrates one example arrangement of the order of the steps of the example process, the steps of the example process may be arranged in any other order to test CPCS 114.

Processing circuitry of control system 120 of system 100 may transmit electrical signal 122 to pressure controller 108 to cause at least one valve of pressure controller 108 to define an orifice (502). Processing circuitry of control system 120 may select one of a plurality of simulation scenarios stored in control system 120 and/or received by control system 120 (e.g., from a computing system and/or device in communication with control system 120). Each simulation scenario may correspond to a set of potential conditions a vehicle containing CPCS 114 may experience. Each simulation scenario may be defined at least in part by simulated conditions (e.g., simulated air pressure conditions). Simulated conditions may include, but are not limited to, a simulated external air pressure or a simulated change in external air pressure.

Processing circuitry of control system 120 may cause control system 120 (e.g., signal generation circuitry of control system 120) to generate electrical signal 122 based on the selected simulation scenario (e.g., based on the simulated conditions for the simulation scenario). Electrical signal 122 may be defined by one or more parameters including, but are not limited to, a voltage 302 of electrical signal 122, an amperage of electrical signal 122, a start time of electrical signal 122, an end time of electrical signal 122, a duration of electrical signal 122, or the like. The processing circuitry may select values for at least one of the one or more parameters based at least in part on simulated conditions for the selected simulation scenario. For example, the processing circuitry may be configured to select voltage 302 of electrical signal 122 and/or a change in voltage 302 of electrical signal 122 over time 402 based on the simulated external air pressure and/or simulated change in external air pressure for the selected simulation scenario. In some examples, a greater simulated external air pressure causes the processing circuitry to select a higher voltage 302 for electrical signal 122, and vice versa. In some examples, a greater simulated change in external air pressure causes the processing circuitry to select greater rate of change for voltage 302, and vice versa.

Control system 120 may be electrically connected to pressure controller 108 of system 100. The processing circuitry of control system 120 may cause control system 120 to generate and transmit electrical signal 122 to pressure controller 108. Pressure controller 108 may include one or more variable-orifice valves. Each variable-orifice valve may be configured to assume a plurality of opening states, with the open orifice of the valve defining a different effective diameter in each opening state. Each valve may be fluidically connected to pressure source 102 (e.g., via pressure regulator 104), to vacuum source 106 (e.g., via vacuum regulator 110), or to an external environment.

Pressure controller 108 may be configured to transition one or more of the valves between closing state and opening state and/or between two different opening states in response to receiving electrical signal 122. The opening state of the one or more valves (e.g., the effective diameter of the orifice of the one or more valves) may vary as a function of voltage 302 of electrical signal 122. For example, pressure controller 108 is configured to cause the one or more valves to define orifices with larger effective diameters in response to receiving electrical signal 122 with a higher voltage 302, and vice versa. Pressure controller 108 may open each valve individually in response to electrical signal 122 or may open two or more valves simultaneously in response to electrical signal 122. In some examples, pressure controller 108 is configured to open a first valve (e.g., a valve connected to pressure source 102) in response to a first electrical signal from control system 120 and to open a second valve (e.g., a valve connected to vacuum source 106) in response to a second electrical signal from control system 120 that is different from the first electrical signal.

Processing circuitry of control system 120 may cause pressure controller 108 to output air from pressure source 102 into an enclosure (e.g., test enclosure 112) containing CPCS 114 through the orifice (504). Once pressure controller 108 opens one or more valves in response to electrical signal 122, pressurized air may flow from pressure source 102, across pressure regulator 104, and into pressure controller 108. The one or move valves may connect pressure controller 108, and by extension pressure source 102 to test enclosure 112 containing CPCS 114. In such examples, pressurized air may flow from pressure source 102, across pressure regulator 104 and one or more open valves of pressure controller 108, and into the inner volume of test enclosure 112, e.g., to pressurize test enclosure 112. In some examples, one or more valves of pressure controller 108 may allow for the flow of pressurized air out of test enclosure 112, e.g., to the external environment or to vacuum source 106. The flow rate of air across the valves of pressure controller 108 and into test enclosure 112 (e.g., from pressure source 102) and/or out of test enclosure 112 (e.g., to vacuum source 106 and/or the external environment) is a function of the effective diameter of the open orifices defined by the valves.

The processing circuitry of control system 120 may select parameters for electrical signal 122 to balance the effective diameters of the orifices of different valves to granularly control the output pressure of pressure controller 108 and thereby the pressure and/or change in pressure of air in test enclosure 112. For example, the processing circuitry may cause control system 120 to transmit electrical signal 122 to pressure controller 108 to cause a first valve connecting test enclosure 112 to pressure source 102 to define an orifice with a greater effective diameter than an orifice defined by a second valve connecting test enclosure 112 to vacuum source 106. In such examples, the difference in orifice size between the first valve and the second valve may cause pressure controller 108 to define a positive output pressure and to pressurize test enclosure 112. The magnitude of the output pressure may be dependent on the pressure of air flowing from pressure source 102 into pressure controller 108 and/or the effective diameters of the orifices of the first valve and the second valve. For example, the output pressure may be greater if the effective diameter of the orifice of the first valve is greater than the effective diameter of the orifice of the second valve, and vice versa.

In another example, the processing circuitry may cause control system 120 to transmit electrical signal 122 to pressure controller 108 to cause the first valve to define an orifice with a smaller effective diameter than the orifice defined by the second valve. In such examples, the difference in orifice size between the first valve and the second valve may cause pressure controller 108 to define a negative output pressure and to depressurize test enclosure 112. The Processing circuitry may balance and adjust the flow of air into and out of test enclosure 112 via adjustment of the effective diameters of the orifices of the valves of pressure controller 108, e.g., to produce the simulated conditions for the selected simulation scenario within test enclosure 112.

Processing circuitry of control system 120 may receive electrical signal 119 from CPCS 114 indicative of one or more outputs by CPCS 114 in response to pressurization of the enclosure (506). CPCS 114 may detect air pressure and/or change in air pressure within the inner volume of test enclosure 112, e.g., in accordance with instructions stored in and executed by CPCS 114. CPCS 114 may be coupled to CPCS actuator 116 and may transmit output signals to CPCS actuator 116. CPCS actuator 116 may represent the output signals form CPCS 114 in terms of a change in position of CPCS actuator 116. Digital encoder 118 of system 100 may detect the change in position of CPCS actuator 116 and convert the detected position of CPCS 116 into electrical signal 119. Digital encoder 118 may transmit electrical signal 119 to control system 120.

The processing circuitry of control system 120 may receive electrical signal 119 from digital encoder 118. The processing circuitry may determine the response of CPCS 114 (e.g., to the simulated conditions of the simulation scenario) based on electrical signal 119. For example, the processing circuitry may convert electrical signal 119 into output signals for CPCS 114 and compare the output signals against expected output signals to determine whether CPCS 114 is generating expected outputs in response to the simulation scenario. In some examples, the processing circuitry compares electrical signal 119 to an expected electrical signal to determine whether CPCS 114 is generating expected outputs The processing circuitry may output the electrical signals 119 and/or output signals for CPCS 114 to another computing device and/or system and/or to a user interface of control system 120.

The processing circuitry may cause system 100 to subject CPCS 114 to the same simulation scenario or subject CPCS 114 to a different simulation scenario of the plurality of simulation scenarios based on electrical signals 119. The processing circuitry of control system 120 may repeat the process described above until system 100 determines and/or receives user input that CPCS 114 has satisfied all required tests (e.g., generated expected outputs for all simulation scenarios).

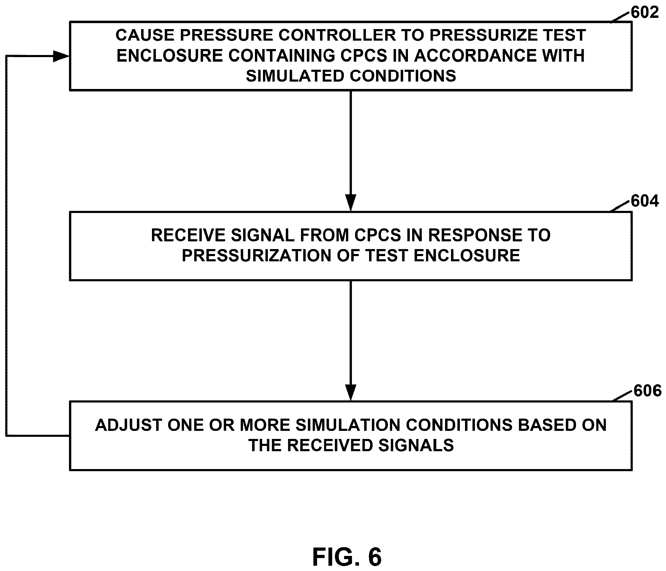

FIG. 6 is a flow chart illustrating an example process of adjusting the test pressure level within test enclosure 112 based on output signals from CPCS 114. The processing circuitry of control system 120 of system 100 may cause pressure controller 108 to pressurize test enclosure 112 containing CPCS 114 in accordance with simulated conditions (602). The processing circuitry may cause pressure controller 108 to pressurize test enclosure 112 in accordance with any of the example processes previously described herein, e.g., with respect to FIG. 5. In some examples, control system 120 may be directly coupled to CPCS 114 (e.g., to an input CPCS 114) and may directly input pressurized air into CPCS 114.

The processing circuitry of control system 120 may receive signals (e.g., electrical signals 119) from CPCS 114 in response to pressurization of test enclosure 112 (604). The processing circuitry may receive signals from CPCS 114 in accordance with any of the example processes previously described herein, e.g., with respect to FIG. 5. For example, processing circuitry may receive electrical signals 119 from digital encoder 118 coupled to CPCS actuator 116.

The processing circuitry of control system 120 may adjust one or more simulation conditions based on the received signals (606). The processing circuitry may then cause pressure controller 108 to pressurize test enclosure 112 containing CPCS 114 in accordance with the adjusted simulated conditions (602). System 100 may subject CPCS 114 to one or more simulated scenarios such as, but are not limited to, descending in altitude, ascending in altitude, landing, take-off, or other expect operations for a vehicle equipped with CPCS 114. In some examples, system 100 may determine, based on the received signals that CPCS 114 is currently detecting a starting condition for a simulated scenario. In such examples, the processing circuitry may begin the simulated scenario and adjust the one or more simulation conditions, which may cause pressure controller 108 to adjust the pressure within test enclosure 112 in accordance with the adjusted simulation condition(s), e.g., to simulate the vehicle performing a take-off, landing, ascent, descent, or the like.

In some examples, the processing circuitry may determine whether CPCS 114 generated expected outputs for a selected simulation scenario based on the received signals. In such examples, once the processing circuitry determines that CPCS 114 performed as expected for a selected simulation scenario based on the received signals, the processing circuitry may select a different simulation scenario and adjust the one or more simulation conditions to correspond to the stored simulation condition values for the newly selected simulation scenario. The processing circuitry may then cause pressure controller 108 to pressurize test enclosure 112 in accordance with the adjusted simulated conditions, e.g., to subject CPCS 114 to the newly selected simulation scenario.

In some examples, the processing circuitry may, in response to receiving a first set of outputs from CPCS 114 (e.g., electrical signal 119 from digital encoder 118 coupled to CPCS 114), transmit a second electrical signal different from electrical signal 122 to pressure controller 108. Pressure controller 108 may adjust the effective diameter of the orifice of at least one valve in response to the second electrical signal. The adjusted effective diameter may correspond to voltage 302 of the second electrical signal. Voltage 302 of the second electrical signal may be the same as or different from voltage 302 of electrical signal 122. When pressure controller 108 pressurizes test enclosure 112 in response to receiving the second electrical signal by outputting air through the orifice of the at least one valve, test enclosure 112 may be pressurized to a different pressure level compared to when pressure controller 108 pressurizes test enclosure 112 in response to receiving electrical signal 122.

The processing circuitry may receive a second set of outputs from CPCS 114 in response to the different pressure level. The second set of outputs may be different from the first set of outputs (e.g., the values for one or more parameters of the second set of outputs may be different from the values for the same parameters of the first set of outputs). For example, CPCS actuator 116 position in the second set of outputs may be different than CPCS actuator 116 position in the first set of outputs. In some examples, processing circuitry is configured to compare the second set of outputs against the first set of outputs to determine changes in the outputs by CPCS 114 in response to the change in pressure level within test enclosure 112. The processing circuitry may compare the determine change in the outputs against expected change(s) in the outputs to determine whether CPCS 114 is generating expected outputs in response to the change in pressure level. The processing circuitry may iteratively perform steps 602-606 until the processing circuitry determines that CPCS 114 generated expected outputs for each of a plurality of simulation scenarios.

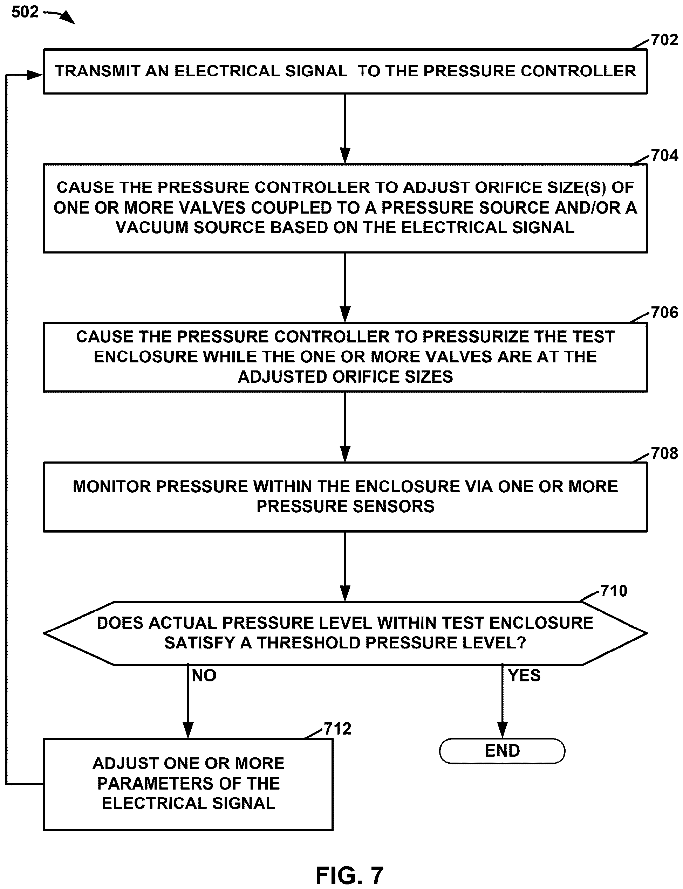

FIG. 7 is a flow chart illustrating an example process of controlling the output pressure by pressure controller 108 of any of FIGS. 1 or 2. While FIG. 7 is primarily described with respect to system 100 as illustrated in FIG. 1, the example process illustrated in FIG. 7 may be performed with any testing systems and/or devices described herein. In addition, while FIG. 7 illustrates one example arrangement of the order of the steps of the example process, the steps of the example process may be arranged in any other order to test CPCS 114.

The processing circuitry of control system 120 may transmit electrical signal 122 to pressure controller 108 (702), cause pressure controller 108 to adjust orifice size(s) of one or more valves coupled to pressure source 102 and/or vacuum source 106 based on electrical signal 122 (704), and cause pressure controller 108 to pressurize test enclosure 112 while the one or more valves are at the adjusted orifice sizes (706). The processing circuitry may perform any of steps 702-706 in accordance with the example processes previously described herein, e.g., with respect to FIG. 5.

One of more of the processing circuitry of control system 120 or pressure controller 108 may monitor pressure within test enclosure 112 via one or more pressure sensors (e.g., pressure sensor 204) (708). In some examples, the actual air pressure within test enclosure 112 is different from the output pressure by pressure controller 108, e.g., due to leaks within system 100, due to reduced air flow from pressure source 102 and/or into vacuum source 106. Pressure sensors may detect the actual air pressure level within test enclosure 112 and transmit the actual air pressure level to one or more of control system 120 or pressure controller 108.

One of more of the processing circuitry of control system 120 or pressure controller 108 may determine whether the actual pressure level within test enclosure 112 satisfies a threshold pressure level (710). The threshold pressure level may correspond to the simulation conditions for a currently selected simulation scenario. For example, for a selected simulation scenario, the threshold pressure level is equivalent to the simulated pressure level.

Based on a determination that the actual pressure level satisfies the threshold pressure level ("YES" branch of 710), one of more of the processing circuitry of control system 120 or pressure controller 108 may continue to pressurize test enclosure 112, e.g., in accordance with previously determined electrical signals 122. In such examples, pressure controller 108 may continue to maintain the actual pressure level within test enclosure 112 at the threshold pressure level or adjust the actual pressure level in accordance with previously-determined simulated changes in pressure level.

Based on a determination that the actual pressure level does not satisfy the threshold pressure level ("NO" branch of 710), the processing circuitry may adjust one or more parameters (e.g., voltage 302) of electrical signal 122 (712). For example, if the actual pressure level is less than the threshold pressure level, the processing circuitry may increase voltage 302 of electrical signal 122, and vice versa. The processing circuitry may then transmit electrical signal 122 with adjusted parameters to pressure source 102 (712), e.g., to cause pressure controller to adjust the orifice size(s) of the valves. The adjustments to the orifice size(s) may adjust output pressure of pressure controller 108, thereby causing pressure controller 108 to adjust the actual pressure level within test enclosure 112 to the threshold pressure level.

The techniques of this disclosure may be implemented in a device or article of manufacture including a computer-readable storage medium. The term "processing circuitry," as used herein may refer to any of the foregoing structure or any other structure suitable for processing program code and/or data or otherwise implementing the techniques described herein. Elements of processing circuitry may be implemented in any of a variety of types of solid state circuit elements, such as CPUs, CPU cores, GPUs, digital signal processors (DSPs), application-specific integrated circuits (ASICs), a mixed-signal integrated circuits, field programmable gate arrays (FPGAs), microcontrollers, programmable logic controllers (PLCs), programmable logic device (PLDs), complex PLDs (CPLDs), a system on a chip (SoC), any subsection of any of the above, an interconnected or distributed combination of any of the above, or any other integrated or discrete logic circuitry, or any other type of component or one or more components capable of being configured in accordance with any of the examples disclosed herein.

Elements of the computing system may be programmed with various forms of software. The computing system may be implemented at least in part as, or include, one or more executable applications, application modules, libraries, classes, methods, objects, routines, subroutines, firmware, and/or embedded code, for example. Elements of the computing system as in any of the examples herein may be implemented as a device, a system, an apparatus, and may embody or implement a method of receiving surveillance signals and predicting future vehicle maneuvers.

The techniques of this disclosure may be implemented in a wide variety of computing devices. Any components, modules or units have been described to emphasize functional aspects and does not necessarily require realization by different hardware units. The techniques described herein may be implemented in hardware, software, firmware, or any combination thereof. Any features described as modules, units or components may be implemented together in an integrated logic device or separately as discrete but interoperable logic devices. In some cases, various features may be implemented as an integrated circuit device, such as an integrated circuit chip or chipset.

A "vehicle" may be an aircraft, a land vehicle such as an automobile, or a water vehicle such as a ship or a submarine. An "aircraft" as described and claimed herein may include any fixed-wing or rotary-wing aircraft, airship (e.g., dirigible or blimp buoyed by helium or other lighter-than-air gas), suborbital spaceplane, spacecraft, expendable or reusable launch vehicle or launch vehicle stage, or other type of flying device. An "aircraft" as described and claimed herein may include any crewed or uncrewed craft (e.g., uncrewed aerial vehicle (UAV), flying robot, or automated cargo or parcel delivery drone or other craft).

The following examples may illustrate one or more of the techniques of this disclosure.

Example 1: a system comprising: a pressure controller coupled to a pressure source and comprising one or more valves, wherein each valve of the one or more valves is configured to define a variable orifice, and wherein the pressure controller is removably coupled to an enclosure containing a Cabin Pressure Control System (CPCS); a digital encoder coupled to the CPCS; and processing circuitry coupled to the pressure controller and to the digital encoder, wherein the processing circuitry is configured to: transmit an electrical signal to the pressure controller to cause at least one valve of the one or more valves to define an orifice, wherein a diameter of the orifice varies as a function of a voltage of the electrical signal; cause the pressure controller to output air from the pressure source into the enclosure through the orifice to pressurize the enclosure to a pressure level, wherein the voltage of the electrical signal controls the pressure level, and wherein a flow rate of the air varies as a function of the diameter of the orifice; and receive, via the digital encoder, a signal from the CPCS indicative of one or more outputs by the CPCS in response to pressurization of the enclosure to the pressure level.

Example 2: the system of example 1, wherein the electrical signal comprises a first electrical signal, wherein the voltage comprises a first voltage, wherein the pressure level of the outputted air comprises a first pressure level wherein the received signal from the CPCS comprises a first received signal, wherein the one or more outputs comprises a first set of one or more outputs, and wherein the processing circuitry is further configured to: transmit, based at least in part on the first received signal, a second electrical signal to the pressure controller to adjust the diameter of the orifice from a first diameter to a second diameter, wherein the second diameter is different from the first diameter, and wherein the second diameter corresponds to a second voltage of the second electrical signal, the second voltage being different from the first voltage; cause the pressure controller to output air from the pressure source into the enclosure through the orifice, wherein a second pressure level of the enclosure corresponds at least in part to the second diameter of the orifice and is different from the first pressure level; receive, via the digital encoder, a second signal from the CPCS indicative of a second set one or more outputs by the CPCS in response to pressurization of the enclosure to the second pressure level; and determine, based on the second signal, changes in at least one output of the one or more outputs by the CPCS in response to a change in the pressure level from the first pressure level to the second pressure level.

Example 3: the system of any of examples 1 and 2, wherein the one or more outputs comprises one or more of: a control signal outputted by the CPCS to adjust an outflow valve configured to adjust cabin pressure; a cabin pressure setpoint; a sensed pressure of the pressurized air; an output force generated by an actuator coupled to the CPCS; or a position of the actuator.

Example 4: the system of any of examples 1-3, further comprising a pressure sensor coupled to enclosure and to one or more of the processing circuitry or the pressure controller, wherein the one or more valves comprises an inlet valve and an outlet valve, and wherein to cause the pressure controller to output air from the pressure source into the enclosure to pressurize the enclosure, the processing circuitry is configured to: cause the pressure controller to control the flow of air into and out of the enclosure when the inlet valve defines a first orifice defining a first diameter and the outlet valve defines a second orifice defining a second diameter, wherein the inlet valve is configured to allow for the flow of air from the pressure source into the enclosure, and wherein the outlet valve is configured to allow for the flow of air out of the enclosure; sense, via the pressure sensor, the pressure level within the enclosure; compare the pressure level against a threshold pressure level; in response to determining that the pressure level does not satisfy the threshold pressure level, cause the pressure controller to adjust at least one of the first diameter of the first orifice or the second diameter of the second orifice.

Example 5: the system of example 4, wherein the pressure sensor is integral to the pressure controller.

Example 6: the system of example 4, wherein the pressure sensor is external to and electrically coupled to the pressure controller.

Example 7: the system of any of examples 4-6, further comprising a pressure regulator coupled to the pressure source and a vacuum regulator coupled to a vacuum source, and wherein the inlet valve fluidically couples the pressure controller to the pressure regulator and the outlet valve fluidically couples the pressure controller to the vacuum regulator.

Example 8: the system of example 7, wherein the processing circuitry is configured to adjust the pressure level within the enclosure by outputting the electrical signal to the pressure controller to adjust at least one of the first diameter or the second diameter.

Example 9: the system of example 8, wherein the processing circuitry is configured to increase the pressure level by outputting the electrical signal to the pressure controller to increase the first diameter.

Example 10: the system of any of examples 8 and 9, wherein the processing circuitry is configured to decrease the pressure level by outputting the electrical signal to the pressure controller to increase the second diameter.

Example 11: the system of any of examples 1-10, wherein the processing circuitry is configured to transmit the electrical signal to the pressure controller to control the diameter of the orifice and reduce noise within the pressure level over time.

Example 12: the system of any of examples 1-11, wherein the processing circuitry comprises a Proportional-Integral-Derivative (PID) controller.

Example 13: a method comprising: transmitting, by processing circuitry of a system, a first electrical signal to a pressure controller of the system to cause at least one valve of one or more valves of the pressure controller to define an orifice, wherein each valve of the one or more valves is configured to define a variable orifice, and wherein a diameter of the orifice varies as a function of a voltage of the electrical signal; causing, by the processing circuitry, the pressure controller to output air from a pressure source to an enclosure containing a Cabin Pressure Control System (CPCS) through the orifice to pressurize the enclosure to a pressure level corresponding to the first electrical signal, wherein a flow rate of the air varies as a function of the diameter of the orifice; receiving, by the processing circuitry and via a digital encoder of the system, a second electrical signal from the CPCS indicative of one or more outputs by the CPCS in response to pressurization of the enclosure to the pressure level.

Example 14: the method of example 13, wherein the voltage comprises a first voltage, wherein the pressure level of the outputted air comprises a first pressure level, wherein the one or more outputs comprises a first set of one or more outputs, and wherein the method further comprises: transmitting, by the processing circuitry and based at least in part on the second electrical signal, a third electrical signal to the pressure controller to adjust the diameter of the orifice from a first diameter to a second diameter, wherein the second diameter is different from the first diameter, and wherein the second diameter corresponds to a second voltage of the third electrical signal, the second voltage being different from the first voltage; causing, by the processing circuitry, the pressure controller to output air from the pressure source into the enclosure through the orifice when the orifice is at the second diameter to pressurize the enclosure to a second pressure level, wherein the second pressure level of the enclosure corresponds at least in part to the third electrical signal and is different from the first pressure level; receiving, by the processing circuitry and via the digital encoder, a fourth electrical signal from the CPCS indicative of a second set of one or more outputs by the CPCS in response to pressurization of the enclosure to the second pressure level; and determining, by the processing circuitry and based on the fourth electrical signal, changes in at least one output between the first set of one or more outputs and the second set of one or more outputs by the CPCS in response to a change in the pressure level from the first pressure level to the second pressure level.

Example 15: the method of any of examples 13 and 14, wherein the one or more outputs comprises one or more of: a control signal outputted by the CPCS to adjust an outflow valve configured to adjust cabin pressure; a cabin pressure setpoint; a sensed pressure of the pressurized air; an output force generated by an actuator coupled to the CPCS; or a position of the actuator.

Example 16: the method of any of examples 13-15, wherein causing the pressure controller to output air from the pressure source into the enclosure to pressurize the enclosure comprises: causing, by the processing circuitry, the pressure controller to control flow of air into and out of the enclosure when an inlet valve of the one or more valves defines a first orifice defining a first diameter and an outlet valve of the one or more valves defines a second orifice defining a second diameter, wherein the inlet valve is configured to allow for the flow of air from the pressure source into the enclosure, and wherein the outlet valve is configured to allow for the flow of air out of the enclosure; sensing, by the processing circuitry and via a pressure sensor coupled to the enclosure, the pressure level within the enclosure; comparing, by the processing circuitry, the pressure level against a threshold pressure level; and in response to determining that the pressure level does not satisfy the threshold pressure level, causing, by the processing circuitry, the pressure controller to adjust at least one of the first diameter of the first orifice or the second diameter of the second orifice.

Example 17: the method of example 16, wherein the pressure sensor is integral to the pressure controller.

Example 18: the method of example 16, wherein the pressure sensor is external to and electrically coupled to the pressure controller.

Example 19: the method of any of examples 16-18, wherein the pressure controller is coupled to a pressure regulator coupled to the pressure source via the inlet valve, and wherein the pressure controller is coupled to a vacuum regulator via the outlet valve.

Example 20: the method of example 19, further comprising: transmitting, by the processing circuitry, the electrical signal to the pressure controller to adjust the pressure level within the enclosure by adjusting at least one of the first diameter or the second diameter.

Example 21: the method of example 20, wherein transmitting the electrical signal to the pressure controller to adjust the pressure level within the enclosure comprises: increasing the pressure level by transmitting, by the processing circuitry, the electrical signal to the pressure controller to increase the first diameter.

Example 22: the method of any of examples 20 and 21, wherein transmitting the electrical signal to the pressure controller to adjust the pressure level within the enclosure comprises: decreasing the pressure level by transmitting, by the processing circuitry, the electrical signal to the pressure controller to increase the second diameter.

Example 23: the method of any of examples 13-22, further comprising: transmitting, by the processing circuitry, the electrical signal to the pressure controller to control the diameter of the orifice and reduce noise within the pressure level over time.

Example 24: the method of any of examples 13-23, wherein the processing circuitry comprises a Proportional-Integral-Derivative (PID) controller.

Example 25: a system for testing a Cabin Pressure Control System (CPCS), the system comprising: a pressure controller comprising: an inlet valve coupled to a pressure source, the inlet valve being configured to define a first variable-diameter orifice, and an outlet valve coupled to a vacuum source, the outlet valve being configured to define a second variable-diameter orifice; an enclosure configured to retain the CPCS; a digital encoder coupled to the CPCS; and processing circuitry coupled to the pressure controller and to the digital encoder, wherein the processing circuitry is configured to: transmit a first electrical signal to the pressure controller to cause the inlet valve to define the first orifice having a first diameter and to cause the outlet valve to define the second orifice having a second diameter, wherein at least one of the first diameter or the second diameter varies as a function of a voltage of the electrical signal; cause the pressure controller to pressurize the enclosure to a pressure level by inputting air from the pressure source into the enclosure via the first orifice and removing air from the enclosure to a vacuum source via the second orifice, wherein the pressure level within the enclosure varies as a function of the first diameter and the second diameter; and receive, via the digital encoder, a second electrical signal from the CPCS indicative of one or more outputs by the CPCS in response to pressurization of the enclosure to the pressure level.

Example 26: the system of example 25, wherein the one or more outputs comprises one or more of: a control signal outputted by the CPCS to adjust an outflow valve configured to adjust cabin pressure; a cabin pressure setpoint; a sensed pressure of the pressurized air; an output force generated by an actuator coupled to the CPCS; or a position of the actuator.

Example 27: the system of any of examples 25 and 26, further comprising a pressure sensor coupled to the enclosure and to the processing circuitry, and wherein to cause the pressure controller to pressure the enclosure to the pressure level, the processing circuitry is configured to: sense, via the pressure sensor, an actual pressure level within the enclosure; compare the actual pressure level against the pressure level corresponding to the electrical signal; and in response to determining that the actual pressure level is different from the pressure level corresponding to the electrical signal, adjust the voltage of the first electrical signal to cause the pressure controller to adjust at least one of the first diameter or the second diameter.

Example 28: the system of example 27, wherein the pressure sensor is integral to the pressure controller.

Example 29: the system of example 27, wherein the pressure sensor is external to and electrically coupled to the pressure controller.

Example 30: the system of any of examples 25-29, wherein the processing circuitry is configured to increase the pressure level by adjusting the voltage of the first electrical signal to cause the pressure controller make an adjustment to one or more of the first orifice or the second orifice, the adjustment comprising at least one of: an increase in the first diameter of the first orifice; or a decrease in the second diameter of the second orifice.

Example 31: the system of any of examples 25-30, wherein the processing circuitry is configured to decrease the pressure level by adjusting the voltage of the first electrical signal to cause the pressure controller make an adjustment to one or more of the first orifice or the second orifice, the adjustment comprising at least one of: a decrease in the first diameter of the first orifice; or an increase in the second diameter of the second orifice.

Example 32: the system of any of examples 25-31, wherein the processing circuitry comprises a Proportional-Integral-Derivative (PID) controller.

## Claims

1. A system comprising:
a pressure controller coupled to a pressure source and comprising one or more valves, wherein each valve of the one or more valves is configured to define a variable orifice, and wherein the pressure controller is removably coupled to an enclosure containing a Cabin Pressure Control System (CPCS);
a digital encoder coupled to the CPCS; and
processing circuitry coupled to the pressure controller and to the digital encoder, wherein the processing circuitry is configured to:
transmit an electrical signal to the pressure controller to cause at least one valve of the one or more valves to define an orifice, wherein a diameter of the orifice varies as a function of a voltage of the electrical signal;
cause the pressure controller to output air from the pressure source into the enclosure through the orifice to pressurize the enclosure to a pressure level, wherein the voltage of the electrical signal controls the pressure level, and wherein a flow rate of the air varies as a function of the diameter of the orifice; and
receive, via the digital encoder, a signal from the CPCS indicative of one or more outputs by the CPCS in response to pressurization of the enclosure to the pressure level.

2. The system of claim 1, wherein the electrical signal comprises a first electrical signal, wherein the voltage comprises a first voltage, wherein the pressure level of the outputted air comprises a first pressure level wherein the received signal from the CPCS comprises a first received signal, wherein the one or more outputs comprises a first set of one or more outputs, and wherein the processing circuitry is further configured to:
transmit, based at least in part on the first received signal, a second electrical signal to the pressure controller to adjust the diameter of the orifice from a first diameter to a second diameter, wherein the second diameter is different from the first diameter, and wherein the second diameter corresponds to a second voltage of the second electrical signal, the second voltage being different from the first voltage;
cause the pressure controller to output air from the pressure source into the enclosure through the orifice, wherein a second pressure level of the enclosure corresponds at least in part to the second diameter of the orifice and is different from the first pressure level;
receive, via the digital encoder, a second signal from the CPCS indicative of a second set one or more outputs by the CPCS in response to pressurization of the enclosure to the second pressure level; and
determine, based on the second signal, changes in at least one output of the one or more outputs by the CPCS in response to a change in the pressure level from the first pressure level to the second pressure level.

3. The system of any of claims 1 or 2, wherein the one or more outputs comprises one or more of:
a control signal outputted by the CPCS to adjust an outflow valve configured to adjust cabin pressure;
a cabin pressure setpoint;
a sensed pressure of the air;
an output force generated by an actuator coupled to the CPCS; or
a position of the actuator.

4. The system of any of claims 1-3, further comprising a pressure sensor coupled to enclosure and to one or more of the processing circuitry or the pressure controller, wherein the one or more valves comprises an inlet valve and an outlet valve, and wherein to cause the pressure controller to output air from the pressure source into the enclosure to pressurize the enclosure, the processing circuitry is configured to:
cause the pressure controller to control the flow of air into and out of the enclosure when the inlet valve defines a first orifice defining a first diameter and the outlet valve defines a second orifice defining a second diameter, wherein the inlet valve is configured to allow for the flow of air from the pressure source into the enclosure, and wherein the outlet valve is configured to allow for the flow of air out of the enclosure;
sense, via the pressure sensor, the pressure level within the enclosure;
compare the pressure level against a threshold pressure level; and
in response to determining that the pressure level does not satisfy the threshold pressure level, cause the pressure controller to adjust at least one of the first diameter of the first orifice or the second diameter of the second orifice.

5. The system of claim 4, wherein the pressure sensor is integral to the pressure controller.

6. The system of claim 4, wherein the pressure sensor is external to and electrically coupled to the pressure controller.

7. The system of any of claims 4-6, further comprising a pressure regulator coupled to the pressure source and a vacuum regulator coupled to a vacuum source, and wherein the inlet valve fluidically couples the pressure controller to the pressure regulator and the outlet valve fluidically couples the pressure controller to the vacuum regulator.

8. The system of claim 7, wherein the processing circuitry is configured to adjust the pressure level within the enclosure by outputting the electrical signal to the pressure controller to adjust at least one of the first diameter or the second diameter.

9. The system of any of claims 1-8, wherein the processing circuitry is configured to transmit the electrical signal to the pressure controller to control the diameter of the orifice and reduce noise within the pressure level over time.

10. The system of any of claims 1-9, wherein the processing circuitry comprises a Proportional-Integral-Derivative (PID) controller.

11. A method comprising:
transmitting, by processing circuitry of a system, a first electrical signal to a pressure controller of the system to cause at least one valve of one or more valves of the pressure controller to define an orifice, wherein each valve of the one or more valves is configured to define a variable orifice, and wherein a diameter of the orifice varies as a function of a voltage of the electrical signal;
causing, by the processing circuitry, the pressure controller to output air from a pressure source to an enclosure containing a Cabin Pressure Control System (CPCS) through the orifice to pressurize the enclosure to a pressure level corresponding to the first electrical signal, wherein a flow rate of the air varies as a function of the diameter of the orifice; and
receiving, by the processing circuitry and via a digital encoder of the system, a second electrical signal from the CPCS indicative of one or more outputs by the CPCS in response to pressurization of the enclosure to the pressure level.

12. The method of claim 11, wherein the voltage comprises a first voltage, wherein the pressure level of the outputted air comprises a first pressure level, wherein the one or more outputs comprises a first set of one or more outputs, and wherein the method further comprises:
transmitting, by the processing circuitry and based at least in part on the second electrical signal, a third electrical signal to the pressure controller to adjust the diameter of the orifice from a first diameter to a second diameter, wherein the second diameter is different from the first diameter, and wherein the second diameter corresponds to a second voltage of the third electrical signal, the second voltage being different from the first voltage;
causing, by the processing circuitry, the pressure controller to output air from the pressure source into the enclosure through the orifice when the orifice is at the second diameter to pressurize the enclosure to a second pressure level, wherein the second pressure level of the enclosure corresponds at least in part to the third electrical signal and is different from the first pressure level;
receiving, by the processing circuitry and via the digital encoder, a fourth electrical signal from the CPCS indicative of a second set of one or more outputs by the CPCS in response to pressurization of the enclosure to the second pressure level; and
determining, by the processing circuitry and based on the fourth electrical signal, changes in at least one output between the first set of one or more outputs and the second set of one or more outputs by the CPCS in response to a change in the pressure level from the first pressure level to the second pressure level.

13. The method of any of claims 11 or 12, wherein the one or more outputs comprises one or more of:
a control signal outputted by the CPCS to adjust an outflow valve configured to adjust cabin pressure;
a cabin pressure setpoint;
a sensed pressure of the air;
an output force generated by an actuator coupled to the CPCS; or
a position of the actuator.

14. A system for testing a Cabin Pressure Control System (CPCS), the system comprising:
a pressure controller comprising:
an inlet valve coupled to a pressure source, the inlet valve being configured to define a first variable-diameter orifice, and
an outlet valve coupled to a vacuum source, the outlet valve being configured to define a second variable-diameter orifice;
an enclosure configured to retain the CPCS;
a digital encoder coupled to the CPCS; and
processing circuitry coupled to the pressure controller and to the digital encoder, wherein the processing circuitry is configured to:
transmit a first electrical signal to the pressure controller to cause the inlet valve to define the first orifice having a first diameter and to cause the outlet valve to define the second orifice having a second diameter, wherein at least one of the first diameter or the second diameter varies as a function of a voltage of the electrical signal;
cause the pressure controller to pressurize the enclosure to a pressure level by inputting air from the pressure source into the enclosure via the first orifice and removing air from the enclosure to a vacuum source via the second orifice, wherein the pressure level within the enclosure varies as a function of the first diameter and the second diameter; and
receive, via the digital encoder, a second electrical signal from the CPCS indicative of one or more outputs by the CPCS in response to pressurization of the enclosure to the pressure level.

15. The system of claim 14, further comprising a pressure sensor coupled to the enclosure and to the processing circuitry, and wherein to cause the pressure controller to pressure the enclosure to the pressure level, the processing circuitry is configured to:
sense, via the pressure sensor, an actual pressure level within the enclosure;
compare the actual pressure level against the pressure level corresponding to the electrical signal; and
in response to determining that the actual pressure level is different from the pressure level corresponding to the electrical signal, adjust the voltage of the first electrical signal to cause the pressure controller to adjust at least one of the first diameter or the second diameter.
